# EUROPEAN PATENT APPLICATION

(11) **EP 2 889 392 A1**
(43) Date of publication of application: **01.07.2015**
(21) Application number: 14200655.0
(22) Date of filing: 30.12.2014
(51) Int. Cl.: C22C 38/00, C21D 9/32, C22C 38/02, C22C 38/04, C22C 38/06, C22C 38/08, C22C 38/12, C22C 38/16, C22C 38/18, F16H 55/06

(54) **High frequency heat treatment material and method of manufacturing gear using the same**

(30) Priority: 30.12.2013 KR 20130166378
(71) Applicant: Hyundai Dymos Incorporated, Seosan-si, Chungcheongnam-do 356-705 (KR)
(72) Inventor: Choi, Byung Ho, 463-828 Gyeonggi-do (KR)
(74) Representative: Zimmermann, Tankred Klaus

(57) **Abstract**

The present invention relates to a high frequency heat treatment material and a method for manufacturing a gear using the same. For this purpose, according to an exemplary embodiment of the present invention, the high frequency heat treatment material is made of 0.50 to 0.55 wt% of carbon (C), 0.30 to 0.50 wt% of silicon (Si), 0.35 to 0.55 wt% of manganese (Mn), 0.30 wt% or less of copper (Cu), 0.25 wt% or less of nickel (Ni), 0.25 wt% or less of chromium (Cr), 0.35 to 0.45 wt% of molybdenum (Mo), 0.002 to 0.004 wt% of boron (B), 0.025 to 0.045 wt% of aluminum (Al), and the balance of Fe, and has stable deformation and physical properties equivalent to carburization heat treatment. Therefore, according to the exemplary embodiment of the present invention, it is possible to obtain a gear having high surface strength and hardness by machining a medium carbon steel, which has a stable deformation during a high frequency heat treatment process and physical properties equivalent to carburization heat treatment, to meet gears and then performing high frequency contour heat treatment on the medium carbon steel.

## Description

### BACKGROUND OF THE INVENTION

### Field of the Invention

Exemplary embodiments of the present invention relate a high frequency heat treatment material and a method of manufacturing a gear using the same, and more particularly, to a technology of obtaining a material which has a stable deformation during a high frequency heat treatment process and physical properties equivalent to carburization heat treatment and a gear having high surface hardness by high frequency contour heat treatment after machining the material to meet gears.

### Description of Related Art

Generally, a material used in gears is a carbon steel or a common steel and includes a small amount of elements such as manganese (Mn), silicon (Si), phosphorus (P), and sulfur (S) which are an alloy using Fe and C as main components. In this case, carbon (C) is 0.03 to 1.7%, manganese (Mn) is 0.2 to 0.8 %, silicon (Si) is equal to or less than 0.35%, sulfur (S) is equal to or less than 0.06 %, and the balance is iron. The carbon component is increased and a pearlite structure is increased correspondingly, such that physical properties and mechanical properties of the carbon steel are changed.

That is, a carbon quantity is increased and a tensile strength and a yield point of steel are increased correspondingly, but when the carbon quantity reaches about 0.9% or more, the tensile strength and the yield point of steel are reduced. Conversely, an extension and an impact value are reduced but brittleness is increased.

When a carbon content is equal to or less than 0.3 %, the carbon steel is divided as low carbon steel, when the carbon content is equal to or less than 0.3 to 0.5 %, the carbon steel is divided as medium carbon steel, and when the carbon content is equal to or more than 0.5 %, the carbon steel is divided as high carbon steel, when the carbon content is equal to or less than 0.3 %, the carbon steel is referred to as mild steel, and when the carbon content is equal to or more than 0.3%, the carbon steel is referred to as hard steel.

The heat treatment is to enhance properties of an industrial material using heating and cooling. That is, when a material is heated or cooled, an internal structure of the material is changed and thus properties thereof may be remarkably enhanced.

Steel is a material of which the properties may be drastically changed by the heat treatment. Here, the heat treatment may make the steel flexible to freely deform the steel, but may make the steel hard enough to cut the steel itself.

The steel suffers from annealing prior to the heat treatment. In this case, since a cast structure, a forging structure, or the like is changed to a standard structure by the annealing treatment, the annealing treatment is performed prior to the original heat treatment.

When the steel is suddenly cooled at about 900 °C by quenching treatment and tempering treatment, the steel suffers from a peculiar phase change (martensitic transformation) and thus has a very hard structure and is re-heated at 200 to 600 °C and thus is produced as high strength steel.

Meanwhile, gears among mechanical elements which transfer power mainly use the low carbon steel, in which the low carbon steel is produced by hot forging, material heat treatment, grinding, soft teeth pitch machining, carburization heat treatment, and hard machining.

However, the low carbon steel suffers from a separate material heat treatment process and carburization heat treatment process after the hot forging, and therefore much costs and time may be required. Further, when the high frequency heat treatment is performed to reduce the costs and time, it is difficult to obtain the martensite structure on a surface of a material.

### SUMMARY OF THE INVENTION

An embodiment of the present invention is directed to obtaining a fine grain by controlling a growth of crystal grain using a molybdenum element while more reducing a usage of elements such as chromium over the traditional material, obtaining equivalent physical properties without suffering from carburization heat treatment, and reducing the number of processes to perform a grinding process in a state in which a material heat treatment process after hot forging is removed.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with an embodiment of the present invention, there is provided a high frequency heat treatment material, wherein the high frequency heat treatment material is made of 0.50 to 0.55 wt% of carbon (C), 0.30 to 0.50 wt% of silicon (Si), 0.35 to 0.55 wt% of manganese (Mn), 0.30 wt% or less of copper (Cu), 0.25 wt% or less of nickel (Ni), 0.25 wt% or less of chromium (Cr), 0.35 to 0.45 wt% of molybdenum (Mo), 0.002 to 0.004 wt% of boron (B), 0.025 to 0.045 wt% of aluminum (Al), and the balance of Fe, and has stable deformation and physical properties equivalent to carburization heat treatment.

In accordance with another embodiment of the present invention, a method for manufacturing a high frequency heat treatment material includes: performing hot forging on a material, which is made of 0.50 to 0.55 wt% of carbon (C), 0.30 to 0.50 wt% of silicon (Si), 0.35 to 0.55 wt% of manganese (Mn), 0.30 wt% or less of copper (Cu), 0.25 wt% or less of nickel (Ni), 0.25 wt% or less of chromium (Cr), 0.35 to 0.45 wt% of molybdenum (Mo), 0.002 to 0.004 wt% of boron (B), 0.025 to 0.045 wt% of aluminum (Al), and the balance of Fe, at 1200 °C (S100); grinding the material in a form meeting gears (S200); performing soft teeth pitch machining to machine a teeth pitch on the ground gears (S300); performing high frequency contour heat treating on the teeth pitch formed on the gears (S400); and performing hard machining to finish the gears which suffer from the high frequency contour heat treatment (S500).

In the high frequency contour heat treating (S400), heat treatment may be performed at 850 to 940 °C for 15 minutes.

### BRIEF DESCRIPTION OF THE DRAWINGS

FIG. 1 is a flow chart illustrating a method for manufacturing a gear using a high frequency heat treatment material according to an exemplary embodiment of the present invention.
FIG. 2 is a block diagram illustrating a process of obtaining a fine grain by growing a crystal grain in the high frequency heat treatment material according to the exemplary embodiment of the present invention.

### DESCRIPTION OF SPECIFIC EMBODIMENTS

Exemplary embodiments of the present disclosure will be described in detail with reference to the accompanying drawings.

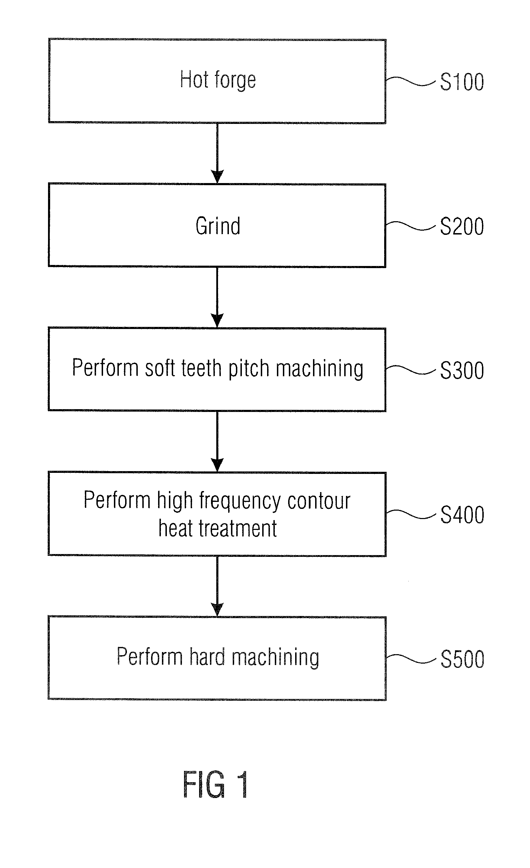

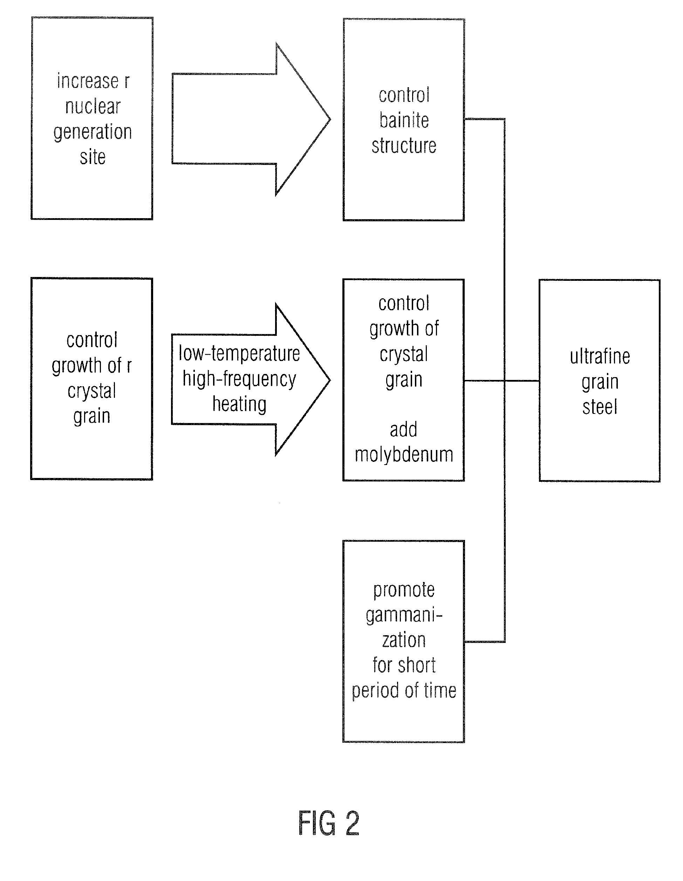

FIG. 1 is a flow chart illustrating a method for manufacturing a gear using a high frequency heat treatment material according to an exemplary embodiment of the present invention and FIG. 2 is a block diagram illustrating a process of obtaining a fine grain by growing a crystal grain in the high frequency heat treatment material according to the exemplary embodiment of the present invention.

The high frequency heat treatment material according to the exemplary embodiment of the present invention has an increased content of carbon C to obtain a martensite structure by high frequency heat treatment over the traditional material, obtains a bainite structure by adding a predetermined amount of molybdenum to increase strength, and is added with aluminum (Al) instead of titanium (Ti) to prevent fatigue life from reducing due to tin (TiN).

Table 1 is a component table of the high frequency heat treatment material according to the exemplary embodiment of the present invention.

**[Table 1]**

| | C | Si | Mn | Cu | Ni | Cr | Mo | B | Al |
|---|---|---|---|---|---|---|---|---|---|
| Min | 0.05 | 0.30 | 0.35 | | | | 0.35 | 0.002 | 0.025 |
| Max | 0.55 | 0.50 | 0.55 | 0.30 | 0.25 | 0.25 | 0.45 | 0.004 | 0.045 |

As illustrated in Table 1, the high frequency heat treatment material according to the exemplary embodiment of the present invention is made of 0.50 to 0.55 wt% of carbon (C), 0.30 to 0.50 wt% of silicon (Si), 0.35 to 0.55 wt% of manganese (Mn), 0.30 wt% or less of copper (Cu), 0.25 wt% or less of nickel (Ni), 0.25 wt% or less of chromium (Cr), 0.35 to 0.45 wt% of molybdenum (Mo), 0.002 to 0.004 wt% of boron (B), 0.025 to 0.045 wt% of aluminum (Al), and the balance of Fe, and thus has stable deformation and physical properties equivalent to carburization heat treatment.

Here, the 0.50 to 0.55 wt% of carbon (C) is added as the strongest interstitial base reinforcing element among chemical components. In this case, as the carbon content is increased, the strength is enhanced and at the time of the high frequency heat treatment, the martensite structure is obtained to make surface strength excellent.

The carbon content of typical carbon alloy steel suffering from the carburization heat treatment is limited to 0.10 to 0.30 wt%, which reduces quenching property at the time of the high frequency heat treatment to make it difficult to secure surface hardness. Therefore, the present invention controls the content of chief carbon element to 0.50 to 0.55 wt%.

The 0.30 to 0.50 wt% of silicon (Si) increases the strength and enhances oxidation resistance / corrosion resistance. Therefore, the silicon content is controlled to 0.30 to 0.50 wt%.

The 0.35 to 0.55 wt% of manganese is solidified within a base to be added to improve flexural fatigue strength. Therefore, the manganese content is controlled to 0.35 to 0.55 wt%.

The 0.30 wt% of copper (Cu) serves to increase the strength and enhance the oxidation resistance / corrosion resistance. Therefore, the copper content is controlled to be equal to or less than 0.30 wt%.

The 0.25 wt% of nickel (Ni) is solidified within the base to be added to improve flexural fatigue strength. Therefore, the nickel content is controlled to be equal to or less than 0.25 wt%.

The 0.25 wt% of chromium (Cr) increases corrosion resistance and heat resistance, facilitates a generation of carbide, and increases wear resistance. Therefore, the chromium content is controlled to be equal to or less than 0.25 wt%.

The 0.35 to 0.45 % of molybdenum (Mo) serves to deepen a quenching depth and increase the surface hardness and may obtain a fine grain by controlling a growth of a crystal grain while increasing the quenching property by adding carbon (C) and boron (B) and have equivalent physical properties without suffering from the carburization heat treatment. That is, when a predetermined amount of molybdenum Mo is added in order to increase the strength, the bainite structure is obtained.

The 0.002 to 0.004 wt% of boron (B) is an element which may increase the quenching property along with carbon and molybdenum and secure the surface hardness and when the boron content is controlled to 0.002 to 0.004 wt%, a surface hardening depth may be maximally deepened and an influence of residual stress on the surface may be excluded.

The 0.025 to 0.045 wt% of aluminum (Al) is added for deoxidation and forms aluminum nitride (AlN) to fine austenite so as to enhance impact toughness. However, when an addition of aluminum is small, a required effect is not obtained and when an addition of aluminum is large, the effect is saturated, such that the addition is preferably limited to 0.025 to 0.045 wt%. That is, to prevent the fatigue life from reducing due to the tin (TiN), aluminum (Al) is added, instead of titanium (Ti).

FIG. 2 is a block diagram illustrating a process of obtaining a fine grain by growing a crystal grain in the high frequency heat treatment material according to the exemplary embodiment of the present invention.

As illustrated, the bainite structure is controlled by increasing a site depending on a generation of a gamma (Γ) nuclear and a growth control of a gamma (Γ) crystal grain is controlled by low-temperature, low-frequency heating. In this case, the molybdenum is added and thus gammanization (Γ) is promoted for a short period of time, thereby obtaining a material (steel) having an ultrafine grain.

Meanwhile, as illustrated in FIG. 1, a gear using the high frequency heat treatment material first suffers from hot forging (S100) and in the hot forging (S100), a material which is made of 0.50 to 0.55 wt% of carbon (C), 0.30 to 0.50 wt% of silicon (Si), 0.35 to 0.55 wt% of manganese (Mn), 0.30 wt% or less of copper (Cu), 0.25 wt% or less of nickel (Ni), 0.25 wt% or less of chromium (Cr), 0.35 to 0.45 wt% of molybdenum (Mo), 0.002 to 0.004 wt% of boron (B), 0.025 to 0.045 wt% of aluminum (Al), and the balance of Fe, is heated at 1200 °C and then forged.

Next, the material obtained by the forging is machined (grinding (S200)) in a form meeting the gears by the grinding, the gears obtained by the grinding are heated, and then the teeth pitch (gear teeth) is machined (soft teeth pitch machining (S300)).

Next, in high frequency contour heat treating (S400), the teeth pitch formed at the gears suffers from high frequency contour heat treatment and then the gears which suffer from the high frequency contour heat treatment are manufactured by hard machining (S500). In this case, in the high frequency contour heat treating (S400), the heat treatment is preferably performed at 850 to 940 °C for 15 minutes.

According to the exemplary embodiments of the present invention, it is possible to obtain the medium carbon material which has the stable deformation during the high frequency heat treatment and the physical properties equivalent to the carburization heat treatment.

Further, it is possible to obtain the gear having surface hardness by machining the material to meet the gears and then performing the high frequency contour heat treatment on the material.

Further, it is possible to reduce costs by more reducing the usage of alloy elements such as chromium over the traditional material.

Further, it is possible to obtain the equivalent physical properties without suffering from the carburization heat treatment.

It is possible to reduce the number of processes to perform the grinding process in the state in which the material heat treatment process after the hot forging is removed.

The foregoing description of the present invention is for illustration, and a person having ordinary skill in the art to which the present invention pertains may be understood that the present invention may be easily changed to other detailed forms without changing technical spirits or essential features. Therefore, it is to be understood that the foregoing exemplary embodiments are exemplified in all aspects and is not limited.

## Claims

1. A high frequency heat treatment material, wherein the high frequency heat treatment material is made of 0.50 to 0.55 wt% of carbon (C), 0.30 to 0.50 wt% of silicon (Si), 0.35 to 0.55 wt% of manganese (Mn), 0.30 wt% or less of copper (Cu), 0.25 wt% or less of nickel (Ni), 0.25 wt% or less of chromium (Cr), 0.35 to 0.45 wt% of molybdenum (Mo), 0.002 to 0.004 wt% of boron (B), 0.025 to 0.045 wt% of aluminum (Al), and the balance of Fe, and has stable deformation and physical properties equivalent to carburization heat treatment.

2. A method for manufacturing a gear using a high frequency heat treatment material, comprising:
performing hot forging on a material, which is made of 0.50 to 0.55 wt% of carbon (C), 0.30 to 0.50 wt% of silicon (Si), 0.35 to 0.55 wt% of manganese (Mn), 0.30 wt% or less of copper (Cu), 0.25 wt% or less of nickel (Ni), 0.25 wt% or less of chromium (Cr), 0.35 to 0.45 wt% of molybdenum (Mo), 0.002 to 0.004 wt% of boron (B), 0.025 to 0.045 wt% of aluminum (Al), and the balance of Fe, at 1200 °C (S100);
grinding the material in a form meeting gears (S200);
performing soft teeth pitch machining to machine a teeth pitch on the ground gears (S300);
performing high frequency contour heat treating on the teeth pitch formed on the gears (S400); and
performing hard machining to finish the gears which suffer from the high frequency contour heat treatment (S500).

3. The method of claim 2, wherein in the high frequency contour heat treating (S400), heat treatment is performed at 850 to 940 °C for 15 minutes.
